# EUROPÄISCHE PATENTSCHRIFT

(11) **EP 1 031 757 B1**
(45) Veröffentlichungstag und Bekanntmachung des Hinweises auf die Patenterteilung: **28.04.2004**
(21) Anmeldenummer: 00101305.1
(22) Anmeldetag: 22.01.2000
(51) Int. Cl.: F16F 13/00, F16F 7/12, B60R 19/20

(54) **Energieabsorber**
Energy absorber
Absorbeur d'énergie

(30) Priorität: 27.02.1999 DE 19908637
(43) Veröffentlichungstag der Anmeldung: 30.08.2000
(73) Patentinhaber: DaimlerChrysler AG, 70567 Stuttgart (DE)
(72) Erfinder: Bayer, Franz Josef, 71364 Winnenden (DE); Hofele, Hans, 89555 Steinheim (DE); Nohr, Matthias, Dr., 73728 Esslingen (DE)

(56) Entgegenhaltungen:
- DE-A- 2 533 088
- DE-A- 4 441 777

## Beschreibung

Die Erfindung betrifft einen Energieabsorber in und/oder an Kraftfahrzeugen mit einer im Wesentlichen gasdichten Hülle, die ein Füllmaterial umgibt und mit mindestens einer Zuleitung versehen ist.

Aus dem Stand der Technik sind eine ganze Reihe von Energieabsorbern bekannt. Die DE 40 10 233 A1 betrifft eine Dämpfungsvorrichtung aus einem elastischen Kunststoffhohlkörper mit Flüssigkeits- und Gaspolster. Durch eine geeignete Wahl der Gas- und Flüssigkeitsfüllung lassen sich die Dämpfungseigenschaften der Vorrichtung in weiten Grenzen variieren. Die DE 36 42 979 A1 betrifft einen Stoßfänger mit einem quer am Rahmen eines Fahrzeugs angeordneten Träger und einer Kunststoffverkleidung. Zwischen der Verkleidung und dem Träger ist wenigstens ein Hohlkörper aus einem thermoplastischen Kunststoff angeordnet. Der Hohlkörper ist mit einem Gas gefüllt. Aus der DE 85 08 904 ist ein Stoßfänger mit einem schlauchförmigen, luftdicht verschließbaren Hohlraum bekannt. Außerdem ist der Stoßfänger mit einem Lufteinlassventil versehen, durch das der luftundurchlässige Hohlraum mit Druckluft gefüllt werden kann. In der DE 852 503 ist eine Stoßstange für Kraftfahrzeuge bekannt, an der ein oder mehrere Puffer zusätzlich angeordnet sind. Die Puffer bilden geschlossene, mittelbar oder unmittelbar mit Gas oder Flüssigkeit auffüllbare Hohlkörper. Die DE 836 748 betrifft eine Sicherheitsanordnung in Fahrzeugen. Die Wände, die Decke und besonders Kanten und vorspringende Teile im Fahrzeuginneren sind mit einer luftkissenartigen Polsterung ausgekleidet. Die Polsterung ist in einzelne Felder unterteilt, deren luftgefüllte Hohlräume miteinander in Verbindung stehen. Die einzelnen Felder sind zusätzlich mit Schwamm- oder Schaumgummi bzw. einem anderen porösen, elastischen Material gefüllt. Die einzelnen Polsterfelder sind getrennt oder in Gruppen über Luftzuführungsleitungen an eine zentrale Druckluftversorgungsanlage angeschlossen. Die DE 28 23 299 betrifft eine pneumatische Sicherheitsstoßstange für Kraftfahrzeuge mit Schutz der Karosserie und der Insassen bei Aufprallgeschwindigkeiten bis ca. 10 km pro Stunde durch elastische Verformung. Die pneumatische Sicherheitsstoßstange besteht aus verformbarem Kunststoff mit Druckluftfüllung und Sicherheitsventil. Die DE 37 40 687 betrifft ein Aufprallelement für ein Kraftfahrzeug mit einem blasgeformten Stützkörper. In dem Stützkörper ist mindestens ein als Energieabsorptionselement dienender Rohrkörper angeordnet. Der Rohrkörper ist mittels in den Stützkörper eingefüllter Polystyrolschaumkugeln fixiert. Aus der DE 23 51 752 ist ein Stoßabsorber aus elastischem Material bekannt. Der Stoßabsorber kann mit Druckluft aufgefüllt werden. Die DE 25 33 088 betrifft eine Vorrichtung zur Vernichtung von Stoßenergie mit Mahlkörpern aus sprödem Material, die sich bei einem Stoß aneinander reiben und zumindest teilweise zu Bruchstücken zerfallen.

Durch die DE 296 11 929 U1 ist ein Stoßdämpfer zum Schutz des menschlichen Körpers bekannt, der aus einem mit elastischen Füllkörpern zumindest teilweise gefüllten und allseits hermetisch verschlossenen Folienbeutel besteht, der mit einem Ventil zur Evakuierung und Belüftung versehen ist. Durch den Stoßdämpfer wird ein der jeweils zugeordneten Körperpartie angepasster Schutzkörper geschaffen, der von einem entsprechend gestalteten Sportprotektor aufgenommen wird.

Aus der DE 44 41 777 A1 ist ein Insassenschutzsystem bekannt, dass eine gasdichte Hülle, die Füllmaterial umfasst, sowie eine Zuleitung und eine Vakuumquelle aufweist. Die Vakuumquelle ist an eine Regel- beziehungsweise Steuereinheit angeschlossen, die im Falle eines Unfalls einen in der gasdichten Hülle herrschenden überdruck entweichen lässt, so dass das gesamte System weich wird.

Aufgabe der Erfindung ist es, bei einem Kraftfahrzeug situationsbedingt einen Energieabsorber mit verbesserten Absorptionseigenschaften bereitzustellen.

Die Aufgabe wird durch die Merkmale des Patentanspruches 1 gelöst. Durch das Anlegen von Unterdruck wird ein harter Energieabsorber mit guten Absorptionseigenschaften bereitgestellt. Gleichzeitig ist durch den Unterdruck gewährleistet, dass die in der Regel flexible Hülle des Energieabsorbers auch bei einer stoßartigen Beanspruchung ihre Form behält. Es kommen Anwendungen als Schaumersatz im Fahrzeuginnen- und Fahrzeugaußenbereich in Frage. So ist ein Einsatz des erfindungsgemäßen Energieabsorbers in Stoßfängern, als Kniepolster oder als Polster im Tür-/Säulenbereich denkbar.

Die mit dem Energieabsorber gekoppelte Ventileinrichtung sorgt dafür, dass der Innenraum der Hülle entweder mit Unterdruck oder mit Umgebungsdruck beaufschlagt wird. Im Normalzustand ist der Innenraum der Hülle mit Umgebungsdruck beaufschlagt. Das hat zur Folge, dass der Energieabsorber relativ weich und angenehm anzufühlen ist. In kritischen Situationen wird der Innenraum der Hülle mit Unterdruck beaufschlagt. Dadurch wird das Füllmaterial komprimiert und die Hülle legt sich eng an das Füllmaterial an. Der Energieabsorber verhärtet sich insgesamt. Wenn eine kritische Situation nicht zu einem Aufprall auf den Energieabsorber oder der Aufprall nicht zu einer irreversiblen Veränderung des Energieabsorbers führt, kann wieder Umgebungsdruck an den Innenraum der Hülle angelegt werden. Ein Auslösen des Energieabsorbers führt also nicht zwangsweise dazu, dass er unbrauchbar wird und ausgetauscht werden muss.

Durch die Pre-Crash-Sensorik wird erreicht, dass der Innenraum der Hülle nur in Pre-Crash-Situationen mit Unterdruck beaufschlagt wird. Dabei ist es möglich, auf eine bereits im Fahrzeug vorhandene Pre-Crash-Sensorik zurückzugreifen. Der erfindungsgemäße Energieabsorber kann also ohne großen Aufwand in existierende Fahrzeuge integriert werden.

Eine besondere Ausführungsart der Erfindung ist dadurch gekennzeichnet, dass das Füllmaterial nicht deformierbar ausgebildet ist. Als Füllmaterial kann z. B. ein partikelförmiges Schüttgut, wie Sand, verwendet werden. Die inkompressiblen Sandkörner führen dazu, dass der Energieabsorber reversibel funktioniert, solange die Hülle nicht beschädigt wird.

Eine weitere besondere Ausführungsart der Erfindung ist dadurch gekennzeichnet, dass das Füllmaterial deformierbar ausgebildet ist. Ein im weichen Zustand gallertartiges Material (z.B. Hohlkugeln) als Füllmaterial kollabiert bei einer stoßartigen Beanspruchung in sich und stellt dadurch Deformationsweg zur Verfügung. Das führt dazu, dass der Energieabsorber irreversibel arbeitet und demzufolge nach einer stoßartigen Beanspruchung ausgetauscht werden muss.

Weitere Vorteile, Merkmale und Einzelheiten der Erfindung ergeben sich aus der nachfolgenden Beschreibung, in der unter Bezugnahme auf die Zeichnung ein Ausführungsbeispiel der Erfindung im Einzelnen beschrieben ist. Dabei können die in den Ansprüchen und in der Beschreibung erwähnten Merkmale jeweils einzeln für sich oder in beliebiger Kombination erfindungswesentlich sein.

In der Zeichnung zeigt:
- Fig. 1: eine schematische Schnittdarstellung eines erfindungsgemäßen Energieabsorbers im Normalzustand und
- Fig. 2: den Energieabsorber aus Fig. 1 in einem mit Unterdruck beaufschlagten Zustand.

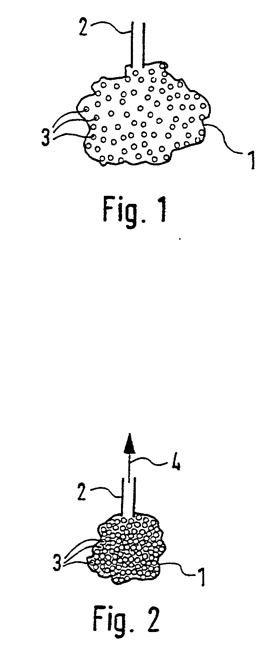

Der in Fig. 1 im Querschnitt dargestellte Energieabsorber umfasst eine flexible, gasdichte Hülle 1. Die flexible Hülle 1 umgibt eine Vielzahl von Partikeln 3 eines Füllmaterials. Über eine Zuleitung 2 kann der Innenraum der Hülle 1 mit einer Vakuumquelle in Verbindung gesetzt werden.

In Fig. 2 ist durch einen Pfeil 4 angedeutet, dass der Innenraum der Hülle 1 mit Unterdruck beaufschlagt ist. Wie man sieht, hat sich die Hülle 1 im Gegensatz zu der in Fig. 1 dargestellten Stellung um das Füllmaterial herum zusammengezogen. Die einzelnen Partikel 3 liegen eng aneinander. Dadurch wird eine Verfestigung des Energieabsorbers erreicht.

Durch die Erfindung wird ein schaltbarer Energieabsorber auf der Basis des Vakuumprinzips geschaffen. Die Hülle 1 ist allseitig geschlossen und kann auch mit mehreren Zuleitungen versehen sein. An die Hülle 1, die weitestgehend luftundurchlässig ist, wird je nach Randbedingungen ein Vakuum angelegt oder die Zufuhr von Luft oder einem anderen Medium ermöglicht.

Die Hülle ist mit einem Medium gefüllt, welches sich im weitesten Sinne sandartig oder gallertartig verhält. Das Füllmaterial kann aus einem quasi kugelförmigen Material oder hohlkugelförmigen Material bestehen. Die Funktion ist unabhängig von der geometrischen Form des Füllmaterials. Generell sind zwei Arten von Füllmaterial zu unterscheiden. Zum einen können Materialien eingesetzt werden, die selbst nur kaum eine Eigendeformation zulassen. Zum anderen können Materialien eingesetzt werden, die in sich kollabieren und dadurch Deformationsweg zur Verfügung stellen. Auf diese Art und Weise können reversible und nicht reversible Absorber realisiert werden.

Folgende Anwendungsmöglichkeiten bieten sich an: Schaumersatz im Stoßfänger, Kniepolster, Polster im Tür- oder Säulenbereich. Allen Anwendungen ist gemein, dass unter Druckbelastung mehr oder weniger Energie dissipiert wird.

## Patentansprüche

1. Energieabsorber in und/oder an Kraftfahrzeugen, mit einer im Wesentlichen gasdichten Hülle (1), die ein Füllmaterial (3) umgibt und mit mindestens einer Zuleitung (2) versehen ist, wobei die Zuleitung (2) an eine Vakuumquelle angeschlossen ist,
**dadurch gekennzeichnet,**
**dass** der Energieabsorber mit einer Ventileinrichtung gekoppelt ist, die dafür sorgt, dass der Innenraum der Hülle (1) im Normalzustand mit Umgebungsdruck und in kritischen Situationen mit Unterdruck beaufschlagt wird und wobei der Energieabsorber mit einer Pre-Crash-Sensorik gekoppelt ist.

2. Energieabsorber nach Anspruch 1,
**dadurch gekennzeichnet,**
**dass** das Füllmaterial (3) nicht deformierbar ausgebildet ist.

3. Energieabsorber nach Anspruch 1,
**dadurch gekennzeichnet,**
**dass** das Füllmaterial (3) deformierbar ausgebildet ist.

## Claims

1. Energy absorber in and/or on automotive vehicles, with a substantially gas-tight skin (1) enclosing a filler material (3) and having at least one inlet line (2), the inlet line (2) being connected to a vacuum source,
**characterised in that**
the energy absorber is coupled with a valve system, which ensures that ambient pressure prevails in the interior of the skin (1) in the normal state and a vacuum pressure prevails in critical situations, the energy absorber being coupled with a pre-crash sensor system.

2. Energy absorber as claimed in claim 1,
**characterised in that**
the filler material (3) is not deformable.

3. Energy absorber as claimed in claim 1,
**characterised in that**
the filler material (3) is deformable.

## Revendications

1. Absorbeur d'énergie dans et/ou sur des véhicules automobiles, comportant une enveloppe (1) pour l'essentiel étanche aux gaz, qui entoure un matériau de remplissage (3) et est pourvue d'au moins une conduite d'arrivée (2), la conduite d'arrivée (2) étant fixée à une source de dépression, **caractérisé en ce que** l'absorbeur d'énergie est couplé à un dispositif de soupape, qui fait en sorte que l'espace intérieur de l'enveloppe (1), à l'état normal, soit alimenté en pression ambiante et, dans les situations critiques, soit alimenté en dépression, l'absorbeur d'énergie étant également couplé à une analyse sensorielle de pré-collision.

2. Absorbeur d'énergie selon la revendication 1, **caractérisé en ce que** le matériau de remplissage (3) est configuré de façon non déformable.

3. Absorbeur d'énergie selon la revendication 1, **caractérisé en ce que** le matériau de remplissage (3) est configuré de façon déformable.
